## Europäisches Patentamt
## European Patent Office
## Office européen des brevets

(19)

(11) Veröffentlichungsnummer: **0 144 781**
**B1**

(12) # EUROPÄISCHE PATENTSCHRIFT

(45) Veröffentlichungstag der Patentschrift:
**10.06.87**

(51) Int. Cl.⁴: **B 65 G 47/14, B 65 G 27/02**

(21) Anmeldenummer: **84113441.4**

(22) Anmeldetag: **07.11.84**

(54) Einrichtung zum Sortieren und Vereinzeln von Kleinteilen mit einem Flansch- und einem Schaftteil.

(30) Priorität: 07.11.83 DE 3340158
09.03.84 DE 3408689

(43) Veröffentlichungstag der Anmeldung:
**19.06.85 Patentblatt 85/25**

(45) Bekanntmachung des Hinweises auf die Patenterteilung:
**10.06.87 Patentblatt 87/24**

(84) Benannte Vertragsstaaten:
**CH DE FR IT LI**

(56) Entgegenhaltungen:
**AT-B-200 499**
**DE-A-2 427 281**
**DE-A-2 802 534**
**GB-A-1 181 492**
**US-A-3 578 142**

(73) Patentinhaber: **Bolzenschweisstechnik Heinz Soyer GmbH, Inningerstrasse 14, D-8031 Wörthsee-Etterschlag (DE)**

(72) Erfinder: **Reiter, Johann, Oberfeld 1, D-8031 Hechendorf (DE)**
Erfinder: **Widmann, Wilhelm, Lilienstrasse 5, D-8031 Gilching (DE)**

(74) Vertreter: **von Kirschbaum, Albrecht, Dipl.- Ing., Hermann- Ehlers- Strasse 21a, D-8034 Germering (DE)**

LIBER, STOCKHOLM 1987

## Beschreibung

Die Erfindung betrifft eine Einrichtung zum Sortieren und Vereinzeln von Kleinteilen mit einem Schaft- und einem Flanschteil, wie Schrauben, Schweißbolzen u.ä. nach dem Überbegriff des Anspruchs 1, wobei diese Einrichtung eine Sortiereinrichtung und eine der Sortiereinrichtung nachgeordnete Vereinzelungseinrichtung aufweist.

Aus der US-A 3 578 172 ist eine solche Einrichtung zum Sortieren und Vereinzeln von Kleinteilen mit einem Flansch- und einem Schaftteil, wie Schrauben, Schweißbolzen u.ä. bekannt. Hierbei ist die Sortiereinrichtung mit einer Vibrationsschwingungen erzeugenden Einrichtung versehen, welche fest unter einem kreiszylindrischen Behälter angebracht ist; an der Innenwand dieses Behälters ist eine vom Boden zum oberen Rand des Behälters reichende schraubenförmige Führungsbahn ausgebildet, welche in einem geschlitzten Abgabeteil mündet. In dem Abgabeteil der Sortiereinrichtung, welches am oberen Ende des letzten oberen Ganges der Führungsbahn vorgesehen ist, ist die Breite eines Schlitzes entsprechend dem Schaftdurchmesser der zu vereinzelnden Kleinteile einstellbar.

Mit den bekannten Sortiereinrichtungen können jedoch nur solche Kleinteile sortiert werden, die ganz bestimmte Abmessungen aufweisen, welchen die Abmessungen der schraubenförmigen Führungsbahn angepaßt sind. Wenn Kleinteile mit anderen Abmessungen sortiert werden sollen, mussen bei den bekannten Sortiereinrichtungen in oft komplizierten und zeitaufwendigen Arbeitsgängen beispielsweise die Abmessungen der Führungsbahn, insbesondere die Abmessungen des Endes des letzten oberen Ganges der Führungsbahn geändert werden.

Solchen Sortiereinrichtungen sind im allgemeinen Vereinzelungseinrichtungen nachgeordnet, denen nacheinander die sortierten Kleinteile zugeführt werden. Herkömmliche Vereinzelungseinrichtungen weisen hierbei einen Zuführschlitz auf, über welchen die Kleinteile so zugeführt werden, daß sie mit ihrem Flanschteil bzw. bei Schrauben mit ihrem Kopf entlang der beiden Kanten des Zuführschlitzes gleiten, während ihr Schaftteil in den Zuführschlitz hineinragt. Gemäß dem internen Stand der Technik geht am Ende des Zuführschlitzes dieser in eine den Abmessungen der jeweils zu vereinzelnden Kleinteile entsprechenden Ausnehmung in einem durch einen Druckluftzylinder betätigbaren Schieber über. Sobald sich in der erwähnten Ausnehmung des Schiebers ein Kleinteil befindet, wird dieser dann mittels des Druckluftzylinders von dem Zuführschlitz soweit weg verschoben, daß das aufgenommene Kleinteil sich genau unter einem rohrförmigen Abgabeteil befindet. Bei Erreichen der Abgabestellung wird über einen Schalter ein Druckluftventil betätigt, worauf von unten Druckluft eingeblasen wird, durch welche das Kleinteil dann in das rohrförmige Abgabeteil und in einen an diesem angeschlossenen Schlauch als nunmehr vereinzeltes Kleinteil zur weiteren Verarbeitung weiter befördert wird.

Die herkömmlichen Vereinzelungseinrichtungen sind bisher jedoch immer so ausgelegt, daß mit ihnen nur immer entsprechend dimensionierte Kleinteile, d.h. insbesondere Kleinteile mit einem ganz bestimmten Flansch- und Schaftdurchmesser vereinzelt werden können, da sowohl die Breite des Einführungsschlitzes als auch die Größe der Ausnehmung in dem Schieber in etwa dem Schaftdurchmesser der zu vereinzelnden Kleinteile entspricht. Wenn dann mit einer solchen Vereinzelungseinrichtung Kleinteile mit einem größeren oder kleineren Schaftdurchmesser vereinzelt werden sollen, muß insbesondere der bisher verwendete Schieber gegen einen neuen Schieber ausgewechselt werden, in welchem die Größe der Ausnehmung der Schaftdurchmesser der nunmehr zu vereinzelnden Kleinteile entspricht und angepaßt ist. Ebenso muß der Zuführschlitz durch Einsetzen bzw. Herausnehmen entsprechender Teile schmaler oder breiter gemacht werden.

Die Umrüstung der herkömmlichen Sortier- und Vereinzelungseinrichtungen ist somit nicht nur eine zeitaufwendige Arbeit, sondern kann im allgemeinen nur von eingearbeitetem bzw. entsprechend geschicktem Bedienungspersonal vorgenommen werden. In vielen Fällen sind aus diesem Grund die Anwender daher bereits dazu übergangen, sich mehrere Sortiereinrichtungen mit nachgeordneten Vereinzelungseinrichtungen zuzulegen, diedann bereits auf die unterschiedlichen Abmessungen der häufigsten zu sortierenden und zu vereinzelnden Kleinteile ausgelegt sind.

Durch die Erfindung soll daher eine Einrichtung zum Sortieren und Vereinzeln von Kleinteilen mit einem Flansch- und einem Schaftteil geschaffen werden, welche Einrichtung auf einfache Weise und in kürzester Zeit den Abmessungen von solchen zu sortierenden und zu vereinzelnden Kleinteilen angepaßt werden kann und auf deren Abmessungen umrüstbar ist. Gemäß der Erfindung ist dies bei einer Einrichtung zum Sortieren und Vereinzeln von Kleinteilen nach dem Oberbegriff des Anspruchs 1 durch die Merkmale im kennzeichnenden Teil des Anspruchs 1 erreicht. Vorteilhafte Weiterbildungen der Erfindung sind in den Unteransprüchen angegeben.

Hierbei kann in bevorzugter Ausführung in der Sortiereinrichtung die Breite eines Teils des letzten oberen Ganges der an der Innenwand des Behälters ausgebildeten, schraubenförmigen Führungsbahn kurz vor dem Ende dadurch geändert werden, daß eine verstellbare, von außen verschiebbare Platte vorgesehen ist. Der ins Innere des Behälters vorstehende Teil der Platte kann dann jeweils so eingestellt werden, daß die Tiefe des vorstehenden Teils etwas kleiner ist als die halbe Länge der zu sortierenden Kleinteile. Alle Kleinteile, welche durch die Vibrationsschwingungen der Sortiereinrichtung auf deren Führungsbahn heranbefördert worden sind und nicht an deren Innenwand anliegen, fallen dann bei richtiger Einstellung der verschiebbaren Platte zurück in den Behälter bzw. auf den darunter liegenden Gang der Führungsbahn.

Um sicherzustellen, daß keine übereinander angeordneten Kleinteile zu der verschiebbaren Platte heranbefördert werden, ist - in Förderrichtung der Kleinteile gesehen - vor der erwähnten verschiebbaren Platte ein Abstreifer vorgesehen, der in einem solchen Abstand von dem obersten Gang der Führungsbahn eingestellt wird, daß jeweils der Flanschteil der zu sortierenden Kleinteile unter dem Abstreifer hindurchbefördert werden kann, und alle übereinander liegenden oder aufrecht stehenden Kleinteile abgestreift werden und wieder in den Behälter bzw. auf den tiefer liegenden Gang der Führungsbahn herunterfallen. Auf dem letzten Teil des letzten oberen Ganges der Führungsbahn befinden sich dann nur noch hintereinander angeordnete, an der Innenwand des Behälters entlanggleitende Einzelteile. Hierbei spielt es keine Rolle, ob sich die Kleinteile zuerst mit ihrem Flanschteil oder mit ihrem Schaftteil dem in Förderrichtung nach der verschiebbaren Platte angeordneten Abgabeteil nähern. Zumindest in ihrer Wirkungsweise, zum Teil sogar in deren Ausbildung sind mit der verschiebbaren Platte und dem davor angeordneten Abstreifer vergleichbare Elemente für sich bereits aus der DE OS 28 02 534 bekannt.

Gemäß einer bevorzugten Ausführungsform der Erfindung ist zur Einstellung der Schlitzbreite des Abgabeteils ist dieses vorzugsweise auf zwei Führungsbolzen verschiebbar angeordnet. Um den Längsschlitz in dem Abgabeteil entsprechend dem Schaftdurchmesser der zu vereinzelnden Kleinteile einzustellen, brauchen an dem Abgabeteil lediglich zwei Sicherungsschrauben gelöst zu werden, so daß dann das Abgabeteil auf den Führungsbolzen verschiebbar ist. Nunmehr braucht nur der Schaft eines Bohrers, dessen Durchmesser ein bis zwei Zehntel Millimeter größer ist als der Durchmesser des Schaftteils der zu vereinzelnden Kleinteile, an dem einen Ende in den Schlitz des Abgabeteils eingeführt zu werden und dann dieses soweit verschoben werden, daß der Schaft des Bohrers in dem Abgabeteil leicht gehalten ist. In dieser Stellung wird dann das eine Ende des Abgabeteils durch die auf dieser Seite vorgesehene Schraube gesichert. Der Schaft des Bohrers wird dann in das andere Ende des Schlitzes in dem Abgabeteil eingebracht, das Abgabeteil dann soweit verschoben, daß der Bohrerschaft leicht gehalten ist, und dann auch dieses Ende des Abgabeteils mittels der zweiten Schraube in dieser Lage gesichert.

Nach Herausziehen des Bohrerschaftes ist dann der Schlitz mit der erforderlichen Toleranz eingestellt, die in der Größenordnung von ein bis zwei Zehntel Millimeter über dem Schaftdurchmesser der zu sortierenden Kleinteile liegt. Durch die Sortiereinrichtung heranbeförderte, hintereinander angeordnete Kleinteile fallen, wenn zuerst der Schaftteil eines zu sortierenden Kleinteils das Abgabeteil erreicht, mit diesem Schaftteil in den Schlitz oder aber das Kleinteil gleitet mit seinem Flanschteil entlang den Rändern des vorher eingestellten Schlitzes, und zwar soweit, bis sein Schaftteil in den Schlitz herunterfällt. An der Auslaßseite des Abgabeteils sind dann die einzelnen Kleinteile so angeordnet, daß sie mit ihrem Flanschteil auf den beiden Rändern des Schlitzes gleiten und ihr Schaftteil nach unten in den Schlitz des Abgabeteils hängt.

In dem Abgabeteil der Sortiereinrichtung werden dann die sortierten Kleinteile zu der Vereinzelungseinrichtung befördert, an deren Eingangsseite gemäß einer bevorzugten Ausführungsform der Erfindung eine fest angebrachte sowie in einem etwa dem Schaftdurchmesser der zu vereinzelnden Kleinteile entsprechenden Abstand eine zweite verstellbar gehaltene Stelleiste vorgesehen ist. In bevorzugter Ausstaltung sind in der verstellbaren Stelleiste zur Aufnahme von Halterungsschrauben vorzugsweise zwei senkrecht zur Verstellrichtung der Stelleiste übereinander liegende Langlöcher ausgebildet, deren Längsachse jeweils in der Verstellrichtung verläuft.

Zum Einstellen der Breite des Zuführschlitzes, d.h. des Abstandes zwischen der feststehenden und der verschiebbaren Stelleiste, brauchen somit nur entsprechend dem Durchmesser des Schaftteils der zu vereinzelnden Kleinteile die beiden durch die Langlöcher der verstellbaren Stelleiste vorstehenden Halterungsschraubolzen gelockert zu werden, damit diese Stelleiste soweit verschoben werden kann, daß der Abstand zwischen den beiden Stelleisten etwas größer ist als der Schaftdurchmesser der zu vereinzelnden Kleinteile.

Zweckmäßigerweise wird die Breite des Zuführschlitzes mit Hilfe beispielsweise des Schaftes eines Spiralbohrers eingestellt, dessen Durchmesser einige Zehntelmillimeter, vorzugsweise zwei bis fünf Zehntelmillimeter, größer ist als der Durchmesser des Schaftteils der zu vereinzelnden Kleinteile. Zur Einstellung der Breite des Zuführschlitzes wird dann der entsprechende Bohrerschaft zwischen die beiden Stelleisten eingebracht und die verschiebbare Stelleiste soweit verschoben, daß der Bohrerschaft leicht in dem Schlitz gehalten ist; zur Fixierung der Breite des Zuführschlitzes werden dann nacheinander die beiden durch die Langlöcher des verstellbaren Stellteils vorstehenden Halterungsschraubbolzen festgezogen.

Gemäß einem weiteren Merkmal der erfindungsgemäßen Einrichtung ist in dem Schieber der Vereinzelungseinrichtung eine Ausnehmung ausgebildet, in welcher ein auswechselbares, in der Draufsicht etwa rechteckiges Einsatzstück befestigt ist; dieses Einsatzstück weist an dem dem rohrförmigen Abgabeteil der Vereinzelungseinrichtung benachbarten Ende eine dem Schaftdurchmesser der zu vereinzelnden Kleinteile entsprechende Ausfräsung auf. In bevorzugter Ausgestaltung ist in dem Einsatzstück an dem der Ausfräsung entgegengesetzten Ende eine mit Innengewinde versehene Bohrung vorgesehen, um eine Schraube zwecks Herausnahme der Einsatzstückes einführen zu können.

Wenn nun die Vereinzelungseinrichtung auf Kleinteile mit einem anderen Schaftdurchmesser umgestellt werden soll, braucht lediglich das bisher verwendete Einsatzstück gegen ein solches ausgewechselt zu werden, dessen Ausfräsung dem Schaftdurchmesser der nunmehr zu vereinzelnden Kleinteile entspricht. Hierzu brauchen lediglich zwei Halterungsbolzen so weit gelöst zu werden, daß das Einsatzstück herausgenommen werden kann. Um das Herausnehmen des Einsatzstückes zu erleichtern, wird in die mit Innengewinde versehene Bohrung eine entsprechende Schraube einige Gewindegänge weit geschraubt, so daß dann das Einsatzstück mit der eingebrachten Schraube herausgezogen werden kann. Das benötigte Einsatzstück, dessen Ausfräsung dem Schaftdurchmesser der nunmehr zu vereinzelnden Kleinteile entspricht, braucht dann nur noch in die Ausnehmung des Schiebers eingesetzt zu werden und mittels der beiden Halterungsschrauben in dem Schieber befestigt zu werden.

Gemäß noch einem weiteren Merkmal der erfindungsgemäßen Einrichtung bildet in der Vereinzelungseinrichtung ein rohrförmiges Abgabeteil mit einem aufwechselbaren Haltewinkel eine Einheit. Beim Umstellen auf andere Kleinteile braucht somit nur mehr der angebrachte, das rohrförmige Abgabeteil tragende Haltewinkel gegen einen Haltewinkel ausgetauscht zu werden, bei welchem der Innendurchmesser des rohrförmigen Abgabeteils dem Flanschdurchmesser der nunmehr zu vereinzelnden Kleinteile entspricht.

Wenn mit der erfindungsgemäßen Einrichtung Kleinteile mit anderen Abmessungen, insbesondere mit einem anderen Schaftdurchmesser, sortiert und vereinzelt werden sollen, wird zuerst in bekannter Weise die Breite des Schlitzes in dem Abgabeteil der Sortiereinrichtung eingestellt. Nach dem Einstellen der Schlitzbreite im sortiererseitigen Abgabeteil wird die verschiebbare Platte nach einem Lockern der sie haltenden Schrauben empirisch so eingestellt, daß alle Kleinteile, die nicht entlang der Innenbahn des Behälters gleiten, in den Behälter bzw. auf den tiefer liegenden Gang der Führungsbahn herunterfallen. Anschließend wird die verschiebbare Platte in dieser Stellung fixiert.

Falls die Sortiereinrichtung auf Kleinteile mit einem größeren Flanschdurchmesser umgestellt werden muß, müßte vor der Verschiebung der Platte der in Förderrichtung der Kleinteile vor dieser Platte angeordnete Abstreifer entsprechend eingestellt werden, damit die Kleinteile mit einem größeren Flanschdurchmesser den Abstreifer überhaupt passieren können. Wie bereits erwähnt, wird der Abstreifer so eingestellt, daß der freie Raum zwischen seiner Unterkante und der Schikanenoberseite einige Zehntel größer ist als der Durchmesser des Flanschteils der zu vereinzelnden Kleinteile.

Zum Umstellen der Sortiereinrichtung der erfindungsgemäßen Einrichtung brauchen somit ingesamt nur fünf Schraubbolzen gelöst und nach Einstellen der verschiedenen Teile wieder angezogen zu werden. Zum Anpassen und Umrüsten der der Sortiereinrichtung nachgeordneten Vereinzelungseinrichtung auf andere Kleinteile brauchen bei der erfindungsgemäßen Einrichtung auch nur wieder maximal fünf Halterungsschraubbolzen gelöst zu werden, nämlich zwei Halterungsbolzen, mit welchen die verstellbare Stelleiste gehaltert ist, zwei Halterungsbolzen, mit welchen das Einsatzstück in dem Schieber befestigt ist, und ein Halterungsbolzen, mit welchem der L-förmige Haltewinkel angebracht ist. Nach einem Einstellen der Breite des Zuführschlitzes auf die vorstehend beschriebene Weise kann dann die verstellbare Stelleiste wieder festgezogen werden. Nach dem Herausziehen des bisherigen Einsatzstückes und nach einem Einsetzen eines Einsatzstückes mit einer passenden Ausfräsung braucht auch dieses mittels der zwei entsprechenden Halterungsschrauben nur wieder in dem Schieber befestigt zu werden. Schließlich braucht mittels des fünften Halterungsschraubbolzens nur noch der neue Haltewinkel angebracht zu werden.

Bei der erfindungsgemäßen Einrichtung kann somit sowohl die Sortiereinrichtung als auch die nachgeordnete Vereinzelungseinrichtung auf einfachste Weise und in kurzer Zeit mit nur wenigen Handgriffen auf die Abmessungen der neuen zu sortierenden und zu vereinzelnden Kleinteile umgestellt werden, wobei als Hilfsmittel zusätzlich lediglich ein Spiralbohrer benötigt wird, dessen Schaftdurchmesser einige Zehntel größer ist als der Schaftdurchmesser der zu vereinzelnden Kleinteile.

Gemäß einer bevorzugten Ausführungsform der erfindungsgemäßen Einrichtung kann bei der Vereinzelungseinrichtung ein Endlagenschalter vorgesehen sein, bei dessen Betätigung durch den Schieber über ein Druckluftventil Druckluft zum Weiterbefördern des gerade vereinzelten, unter dem rohrförmigen Abgabeteil angeordneten Kleinteils eingeleitet wird. Die Verwendung eines Endlagenschalters hat den Vorteil, daß das Druckluftventil erst dann ausgelöst wird, wenn sich der Schieber in einer Stellung befindet, in der sich die Ausfräsung des in ihm befestigten Einsatzstückes genau unter dem rohrförmigen Abgabeteil des L-förmigen Haltewinkels befindet; denn erst in dieser Stellung des Schiebers ist der Schalter in seine Endlage gebracht und löst das Druckluftventil aus. Dadurch ist auf einfache Weise sichergestellt, daß nicht vorzeitig Druckluft eingeleitet wird, was zur Folge haben könnte, daß das vereinzelte Kleinteil nicht weiterbefördert wird oder sich beispielsweise zwischen dem Schieber und dem rohrförmigen Abgabeteil verkantet und dadurch verklemmt.

Nachfolgend wird eine bevorzugte Ausführungsform der Erfindung anhand der anliegenden Zeichnungen im einzelnen erläutert. Es zeigen:

Fig. 1 schematisch eine perspektivische Gesamtansicht der erfindungsgemäßen Einrichtung;

Fig. 2 schematisch eine Draufsicht nur auf eine Sortiereinrichtung der erfindungsgemäßen Einrichtung;

Fig. 3. eine perspektivische Seitenansicht der Sortiereinrichtung der erfindungsgemäßen Einrichtung;

Fig. 4 eine schematische, vergrößerte Schnittansicht entlang der Linie III-III in Fig. 2 durch ein an der Sortiereinrichtung vorgesehenes Abgabeteil, und

Fig. 5 eine Draufsicht auf eine Vereinzelungseinrichtung der erfindungsgemäßen Einrichtung, wobei deren Schieber teilweise aufgebrochen dargestellt ist.

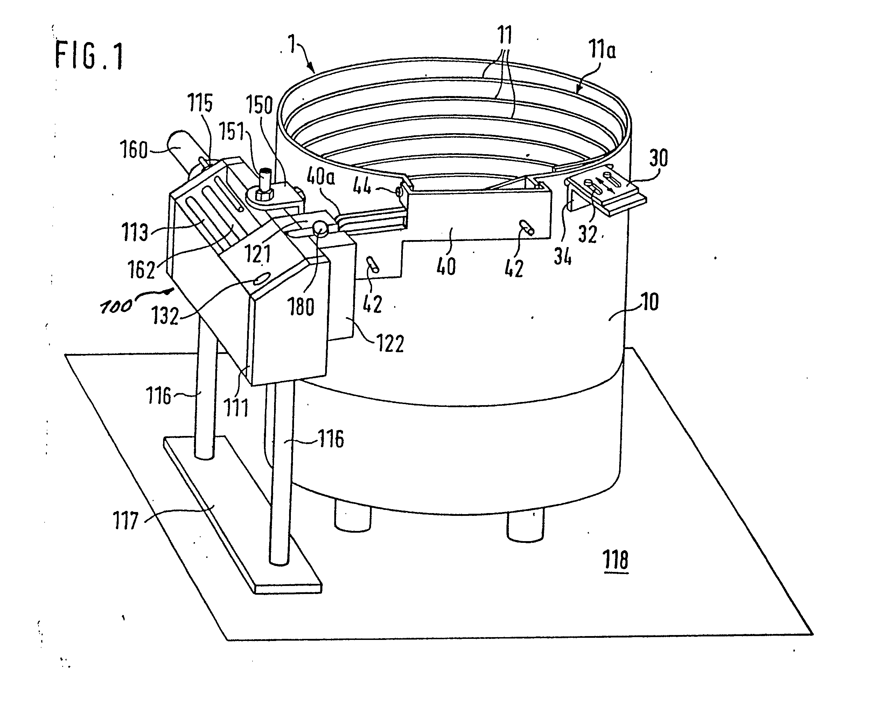

In Fig. 1 ist schematisch eine Gesamtansicht der erfindungsgemäßen Einrichtung zum Sortieren und Vereinzeln von Kleinteilen mit einem Schaft, und einem Flanschteil dargestellt, welche eine Sortiereinrichtung 1 und eine dieser nachgeordnete Vereinzelungseinrichtung 100 aufweist. Die Vereinzelungseinrichtung 100 ist über Stützen 116 an einer Grundplatte 117 befestigt, welche ihrerseits an einer Bodenplatte 118 angebracht ist. In ähnlicher Weise ist die Sortiereinrichtung 1 über nicht näher bezeichnete Stützen an der Bodenplatte 118 in der Weise gehalten, daß die Vereinzelungseinrichtung 100 in Verlängerung eines an der Sortiereinrichtung 1 angebrachten Abgabeteils 40 angeordnet ist.

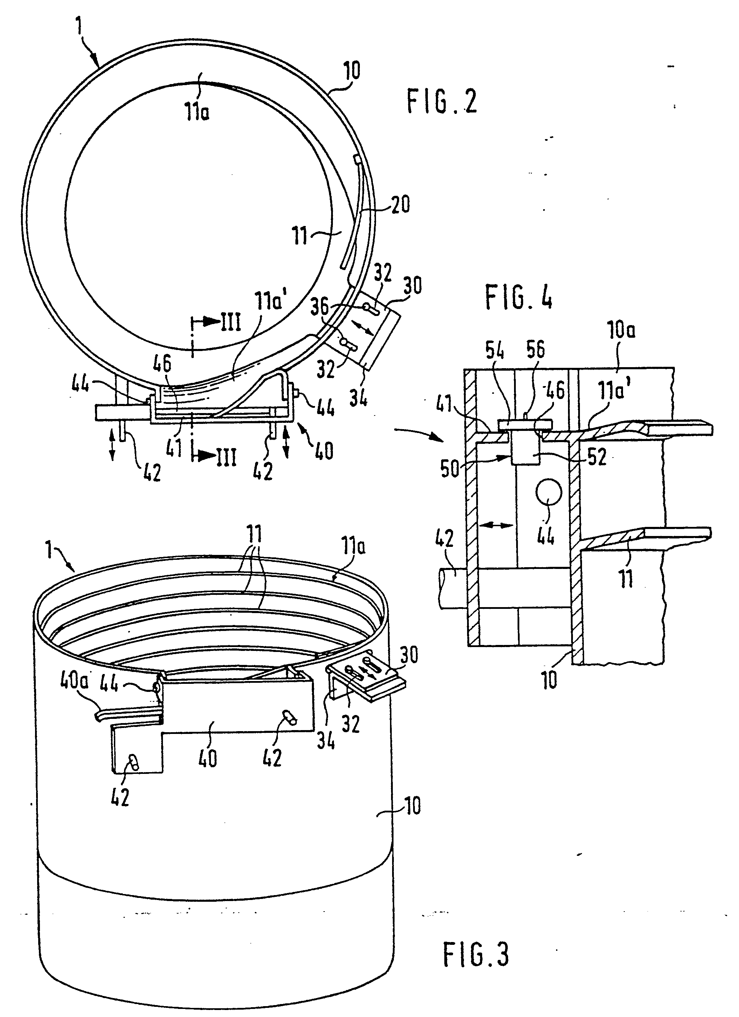

In Fig. 2 und 3 ist die Sortiereinrichtung 1 der erfindungsgemäßen Einrichtung in Draufsicht bzw. in einer Seitenansicht dargestellt. Unter einem im Querschnitt kreiszylindrischen Behälter 10 der Sortiereinrichtung 1 ist eine nicht näher bezeichnete Einrichtung vorgesehen, mit welcher in bekannter Weise Vibrationsschwingungen erzeugt werden, die an den kreiszylindrischen Behälter 10 übertragen werden. Im Inneren des kreiszylindrischen Behälters 10 ist eine schraubenförmige Führungsbahn 11 ausgebildet, welche vom Boden des Behälters 10 schraubenförmig bis zum oberen Rand des Behälters verläuft.

Der letzte obere Gang 11a der Führungsbahn 11 wird, wie aus der Draufsicht der Fig. 2 zu ersehen ist, schmaler und verläuft unter einem federnden, einstellbaren Abstreifer 20 hindurch. Der schmaler werdende letzte Gang 11a der Führungsbahn 11 endet an einer verschiebbaren Platte 30, wobei die Verschiebungsrichtung der platte durch einen mit zwei Spitzen versehenen Pfeil angedeutet ist. Die Platte 30 ist auf einem Stützteil 34 verschiebbar und an diesem mittels Schraubbolzen 36 gehalten, die durch in der Platte 30 ausgebildete Langlöcher 32 hindurchgehen.

Der letzte Gang 11a der Führungsbahn 11 ist links von der verschiebbaren Platte 30 fortgesetzt und geht in einen leicht gewölbten Teil 11a' (siehe Fig. 4) in das Abgabeteil über. Das hbgabeteil 40 ist mittels Schraubbolzen 44 an vom Behälter vorstehenden, nicht näher bezeichneten Ansätzen gehalten. Ferner ist das Abgabeteil durch Führungsbolzen 42 geführt, auf denen es nach Lösen der Schraubbolzen 44 in der durch einen mit zwei Spitzen versehenen Pfeil in Fig. 1 und 3 angezeigten Richtung verschiebbar ist. An dem in Draufsicht etwa U-förmigen Abgabeteil 40 ist etwas unter dessen oberen Rand ein vorspringender, leistenförmiger Ansatz 41 ausgebildet, welcher einem ebenen Teil des letzten Ganges 11a der Führungsbahn 11 gegenüberliegt, welcher seinerseits in den leichtgewölbten Teil 11a' der Schikane übergeht.

Zwischen dem vorspringenden, leistenförmigen Ansatz 41 des Abgabeteils 40 und dem ebenen Teil des letzten Ganges 11a der Fürungsbahn ist ein Schlitz 46 ausgebildet, dessen Breite so eingestellt wird, daß der Schaftteil 52 eines Kleinteils, beispielsweise eines Schweißbolzens 50, durch den Schlitz 46 hindurchtreten kann, wobei dann der Schweißbolzen 50 mit seinem Flanschteil 54 auf den Rändern des vorspringenden leistenförmigen Ansatzes 41 bzw. auf dem ebenen Teil des letzten Ganges 11a der Führungsbahn 11 gleitet, wie aus der schematischen, vergrößerten Schnittansicht der Fig. 2 deutlich zu ersehen ist. In Fig. 4 ist an dem vereinzelten Schweißbolzen 50 auch noch die zum Schweißen mittels Kondensatorentladung erforderliche Zündspitze 56 dargestellt.

Ferner ist in der Seitenansicht der Fig. 3 noch eine Auslaßrutsche 40a in dem Abgabeteil dargestellt, über welche die sortierten Schweißbolzen 50 der nachgeordneten Vereinzelungseinrichtung 100 zugeführt werden.

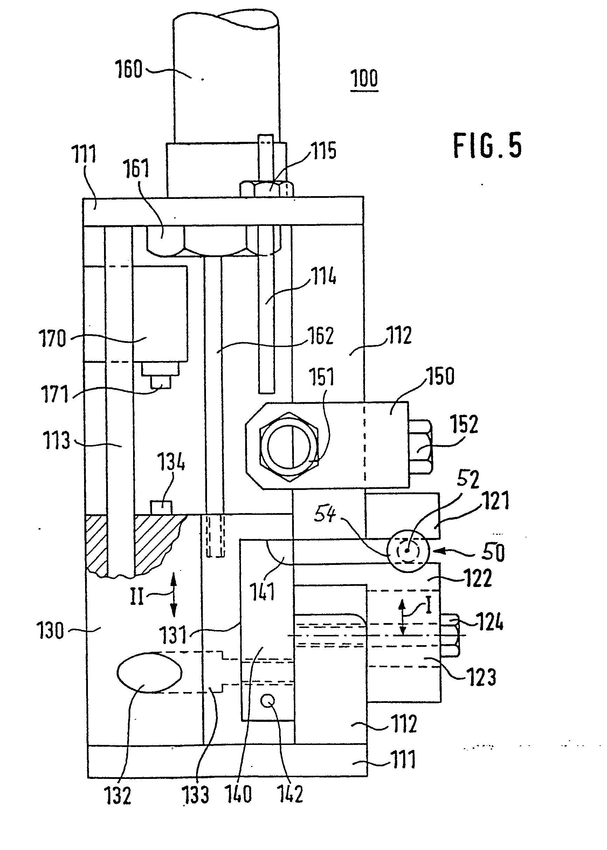

Die Vereinzelungseinrichtung 100 weist zwei Seitenteile 111 und ein Vorderteil 112 (Fig. 5) sowie eine zwischen den beiden Seitenteilen 111 gehalterte Führungsstange 113 auf. An dem Vorderteil 112 der Vereinzelungseinrichtung 100 ist eine feststehende Stelleiste 121 angebracht. In einem etwa dem Durchmesser des Schaftteils 52 des Kleinteils 50 entsprechenden Abstand ist ferner an dem Vorderteil 112 eine verstellbare Stelleiste 122 mitters Halterungsschrauben 124 befestigt. In der Stelleiste 122 sind zwei übereinanderliegende, in der Fig. 5 gestrichelt angedeutete Langlöcher 123 ausgebildet, deren Längsachsen parallel zu der durch einen Pfeil I

angegebenen Verstellrichtung der Stelleiste 122 verlaufen.

Auf der Führungsstange 113 ist ein Schieber 130 verschiebbar gehaltert. Der Schieber 130 ist durch eine Kolbenstange 162 mit einem nur zum Teil dargestellten Druckluftzylinder 160 verbunden, welcher mittels einer Halterungsmutter 161 an dem einen Seitenteil 111 der Vereinzelungseinrichtung 100 befestigt ist. In demselben Seitenteil 111 ist ein einstellbarer Anschlagbolzen 114 vorgesehen, welcher mittels einer Feststellmutter 115 in der eingestellten Lage gesichert ist. Ferner ist an dem Schieber 130 ein Betätigungsstift 134 vorgesehen, durch welchen bei einer Verschiebung des Schiebers 130 in Richtung zu dem Druckluftzylinder 160 ein Auslösestift 171 eines in der Vereinzelungseinrichtung vorgesehenen Endlagenschalters 170 betätigt wird.

Auf der den Stelleisten 121 und 122 zugewandten Seite des Schiebers 130 ist in diesem eine Ausnehmung 131 ausgebildet.

In dieser Ausnehmung 131 sitzt ein Einsatzstück 140, das mittels zweier übereinander angeordneter Schrauben in dem Schieber 130 befestigt ist. Von den zwei übereinander angeordneten Schraubbolzen ist einer durch ein Bezugszeichen 133 angedeutet. Diese Schrauben werden über im Schieber 130 ausgebildete Bohrungen 132 eingeführt. An dem Ende des Einsatzstückes 140, welches dem zwischen den beiden Stelleisten 121 und 122 ausgebildeten Zuführschlitz gegenüberliegt, ist in dem Einsatzstück 140 eine Ausfräsung 141 ausgebildet, deren Abmessung so dimensioniert ist, daß in der Ausfräsung 141 ein Schaftteil 52 des Kleinteils 50 aufgenommen wird. An dem der Ausfräsung 141 entgegengesetzten Ende des Einsatzstückes 140 ist in diesem eine mit Innengewinde versehene Bohrung 142 vorgesehen, in welche zum Herausnehmen des Einsatzstückes 140, wenn die beiden Schraubbolzen 133 gelöst und nicht mehr mit dem Einsatzstück in Eingriff stehen, ein Schraubbolzen geschraubt werden kann.

Ferner ist an dem Vorderteil 112 der Vereinzelungseinrichtung 100 ein in Draufsicht wiedergegebener L-förmiger Haltewinkel 150 (siehe Fig. 1) mittels einer Schraube 152 befestigt. An dem kürzeren, in Draufsicht wiedergegebenen Schenkel des Haltewinkels 150 ist ein rohrförmiges Abgabeteil 151 mittels einer nicht näher bezeichneten Sicherungsmutter befestigt. Der in Draufsicht wiedergegebene Schenkel des Haltewinkels 150 an welchem das rohrförmige Abgabeteil 151 befestigt ist, ist in einem solchen Abstand von der Oberfläche des in dem Schieber 130 befestigten Einsatzstückes 140 angeordnet, daß ein von dem Schieber bzw. dessen Einsatzteil 4 aufgenommenes Kleinteil 50 ohne irgendeine Behinderung unter das rohrförmige Abgabeteil 151 des Haltewinkels 150 gebracht werden kann.

In Fig. 5 ist der Schieber 130 der Vereinzelungseinrichtung 100 in der Stellung wiedergegeben, in welcher ein Kleinteil 50 in der Ausfräsung 141 des im Schieber befestigten Einsatzstückes 140 aufgenommen werden kann. Sobald sich ein Kleinteil 50 in dem Schieber, d.h. in der Ausfräsung 141 des im Schieber befestigten Einsatzteils 140 befindet, wird dieser durch den in zwei Richtungen wirkenden Druckluftzylinder 160 in Richtung zu dem Druckluftzylinder verschoben, und zwar so weit, bis der Schieber 130 an dem entsprechend eingestellten Anschlagbolzen 114 anliegt. Bei Anliegen des Schiebers 130 an dem Anschlagbolzen 114 befindet sich das in der Ausfräsung 141 aufgenommene Kleinteil 50 exakt unter dem am Haltewinkel 150 befestigten, rohrförmigen Abgabeteil 151. Ferner wird bei Anliegen des Schiebers 130 an dem Anschlabolzen 114 durch dessen Betätigungsstift 134 der Auslösestift 171 so weit in den Endlagenschalter 170 verschoben, daß dessen Endlage erreicht ist, und durch ihn ein nicht dargestelltes Druckluftventil ausgelöst wird.

Bei Auslösen des Druckluftventils wird dann über nicht näher dargestellte Leitungen Druckluft so zugeführt, daß das unter dem rohrförmigen Abgabeteil 151 angeordnete Kleinteil 50 in dieses Abgabeteil gedrückt wird und über einen an dem rohrförmigen Abgabeteil 151 angebrachten, in den Figuren nicht näher dargestellten Schlauch dem Gerät zugeführt wird, in welchem das Kleinteil 50 anschließend verarbeitet werden soll. Sobald das Kleinteil 50 aus der Ausfräsung 141 des im Schieber 130 befestigten Einsatzstückes 140 entfernt ist, wird der Schieber 130 durch den Druckluftzylinder 140 wieder in die in der Fig. 5 wiedergegebene Stellung zurückgebracht, in welcher dann das nächste Kleinteil 50 in die Ausfräsung 41 eingebracht wird.

Wenn nun in der erfindungsgemäßen Einrichtung auf Kleinteile, beispielsweise Schweißbolzen 50 mit anderen Abmessungen, insbesondere mit einem anderen Durchmesser des Schaftteils 52 umgestellt werden soll, werden zuerst die noch nicht verarbeiteten Kleinteile aus dem Behälter 10 entfernt. Dann werden an der Sortiereinrichtung die Schrauben 44 an dem Abgabeteil 40 gelöst. Anschließend wird die Breite des Schlitzes 46 in dem Abgabeteil 40, mit Hilfe beispielsweise des Schaftes eines Spiralbohrers eingestellt, dessen Durchmesser einige Zehntel Millimeter, vorzugsweise ein bis zwei Zehntel Millimeter größer ist als der Durchmesser des Schaftteils 52 der zu vereinzelnden Kleinteile 50. Zur Einstellung der Breite des Schlitzes 46 wird der entsprechende Bohrerschaft auf der rechten und linken Seite in den Schlitz 46 eingeführt und das Abgabeteil 40 so verschoben, daß der Bohrerschaft leicht in dem Schlitz gehalten ist, worauf dann zur Fixierung der Schlitzbreite nacheinander die beiden Schrauben 44 angezogen werden.

Anschließend wird der federnde Abstreifer 20 gelockert und so eingestellt, daß der Abstand zwischen seiner Unterseite und der Oberseite des

letzten Ganges 11a der Führungsbahn 11 etwas größer ist als der Durchmesser des Flanschteils der zu vereinzelnden Kleinteile. Nach Einfüllen der zu vereinzelnden Kleinteile in den Behälter 10 und nach dem Einschalten der Sortiereinrichtung werden dann noch die Schrauben 36 gelockert, mittels welchen die Platte 30 an dem Stützteil 34 gehaltert ist. Sobald dann die ersten Kleinteile unter dem Abstreifer 20 durchgelaufen sind und auf die Platte 30 gelangen, wird diese so verschoben und eingestellt, daß nur noch die Kleinteile die Platte 30 passieren können, die entlang der Innenwand des Behälters 10 gleiten. Sobald dies sichergestellt ist, wird die verschiebbare Platte 30 mittels der Schrauben 36 in dieser Stellung gesichert.

Die Kleinteile, welche die Platte 30 passiert haben, gelangen dann in das Abgabeteil 40 und fallen mit ihrem Schaftteil in den Schlitz 46 des Abgabeteils, wobei sie, wie aus Fig.4 zu ersehen ist, mit der Flanschunterseite auf den beiden Rändern 41 des Schlitzes 46 gleiten. Zur Einstellung der Sortiereinrichtung brauchen also nur insgesamt fünf Schrauben nämlich die beiden Schrauben 36, die beiden Schrauben 44 und der nicht näher bezeichnete Schrauben, mit welchem der Abstreifer befestigt ist, gelöst zu werden.

Auch zur Einstellung und Umrüstung der Vereinzelungseinrichtung 100 auf Kleinteile mit einem anderen Schaftdurchmesser brauchen maximal nur fünf Halterungsbolzen gelockert bzw. gelöst zu werden, nämlich die zwei Halterungsschrauben 124, die zwei angedeuteten Halterungsschrauben 133, sowie der Halterungsschrauben 152. Nach dem Lockern der beiden Halterungsschrauben 124 kann die Stelleiste 122 in den durch einen Pfeil I angedeuteten Richtungen verstellt werden. Die Größe des Abstandes zwischen den beiden Stelleisten 121 und 122 läßt sich, wie bereits mehrfach ausgeführt, in einfacher Weise dadurch einstellen, daß zwischen die Stelleisten beispielsweise der Schaft eines Spiralbohrers eingebracht wird, dessen Durchmesser einige Zehntelmillimeter, vorzugsweise zwei bis fünf Zehntelmillimeter, größer als der Durchmesser des Schaftteils 52 der nunmehr zu vereinzelnden Kleinteile 50 ist. Zur Einstellung der Schlitzbreite wird dann die verstellbare Stelleiste 123 so weit in Richtung der feststehenden Stelleiste 121 verschoben, daß der Bohrerschaft leicht in dem Schlitz gehalten ist; hierauf werden dann zur Fixierung der Schlitzbreite nacheinander die beiden Halterungsschrauben 124 angezogen.

Nach dem Lösen der beiden Schrauben 133 wird eine Schraube in die mit Innengewinde versehene Bohrung 142 eingeschraubt und das Einsatzstück 140 nach oben aus dem Schieber 130 herausgezogen. Anschließend wird dann ein neues Einsatzstück 140 eingesetzt, dessen Ausfräsung 141 dem Schaftdurchmesser 51 der nunmehr zu vereinzelnden Kleinteile 50 entspricht. Hierauf wird dann das eingewechselte Einsatzstück 140 mittels der beiden Halterungsschrauben 133 in dem Schieber 130 gesichert. Schließlich wird noch der bisher verwendete Halterungswinkel 150 gegen einen Haltewinkel ausgetauscht, bei welchem der Innendurchmesser des rohrförmigen Abgabeteils 151 etwas größer ist als der Flanschdurchmesser der zur Vereinzelung vorgesehenen Kleinteile 50. Nachdem der passende Haltewinkel 150 an der Vereinzelungseinrichtung 100 angebracht ist, ist auch diese bereits vollständig umgerüstet.

### Patentansprüche

1. Einrichtung zum Sortieren und Vereinzeln von Kleinteilen (50) mit einem Flansch- (54) und einem Schaftteil (52), wie Schrauben, Schweißbolzen, u.ä., bestehend aus einer Sortiereinrichtung (1) mit einer Vibrationsschwingungen erzeugenden Einrichtung, die fest unter einem kreiszylindrischen Behälter (10) angebracht ist, an dessen Innenwand eine vom Boden zum oberen Rand des Behälters (10) reichende, schraubenförmige Führungsbahn (11) ausgebildet ist, die in einem geschlitzten Abgabeteil (40) mündet, und aus einer Vereinzelungseinrichtung, wobei in dem Abgabeteil (40) der Sortiereinrichtung (1), welches am Ende (11a') des letzten oberen Ganges (11a) der Führungsbahn (11) vorgesehen ist, die Breite eines Schlitzes (46) entsprechend dem Schaftdurchmesser der zu vereinzelnden Kleinteile (50) einstellbar ist,
dadurch gekennzeichnet, daß

a) zum Ändern der Breite eines Teils des letzten oberen Ganges (11a) der schraubenförmigen Führungsbahn (11) der Sortiereinrichtung (1) kurz vor deren Ende eine von außen verschiebbare Platte (30) ausgebildet ist, vor welcher (in Förderrichtung der Kleinteile (50) gesehen) ein einstellbarer Abstreifer (20) über dem letzten Gang (11a) der Führungsbahn (11) angebracht ist;

b) nach dem Abgabeteil (40) der Sortiereinrichtung (1) an der Eingangsseite der Vereinzelungseinrichtung (100) eine fest angebrachte Stelleiste (121) und etwa in einem dem Schaftdurchmesser der zu vereinzelnden Kleinteile (50) entsprechenden Abstand eine verstellbar gehalterte Stelleiste (122) vorgesehen sind, und

c) in einer Ausnehmung (131) eines mittels eines Druckzylinders betätigbaren Schiebers (130) der Vereinzelungseinrichtung (100) ein auswechselbares, in der Draufsicht etwa rechteckiges Einsatzstück (140) befestigt ist, welches an dem Ende, das einem rohrförmigen Abgabeteil (151) der Vereinzelungseinrichtung (100) zum Weiterleiten der Kleinteile (50) benachbart ist, eine dem Schaftdurchmesser der zu vereinzelnden Kleinteile (50) entsprechende Ausfräsung (141) aufweist, so daß

d) jedes vereinzelte, in der Ausfräsung (141) aufgenommene Kleinteil (50) mittels des Schiebers (130) zu und unter das rohrförmige, pneumatisch betriebene Abgabeteil (151) der Vereinzelungseinrichtung (100) beförderbar ist.

2. Einrichtung nach Anspruch 1, dadurch gekennzeichnet, daß die verstellbare Platte (30) an der Außenseite des Behälters (10) der Sortiereinrichtung (1) auf einem an diesem (10) angebrachten Stützteil (34) verschiebbar ist und mittels durch Langlöcher (32) in der Platte (30) hindurchgehende Schrauben einstellbar und an dem Stützteil (34) gehalten ist.

3. Einrichtung nach Anspruch 1, dadurch gekennzeichnet, daß das Abgabeteil (40) an der Sortiereinrichtung (1) auf vorzugsweise zwei an der Außenseite des Behälters (10) angebrachten Führungsbolzen (42) verschiebbar ist, und daß die entsprechend dem Schaftdurchmesser der jeweils zu vereinzelnden Kleinteile einstellbare Breite des Schlitzes (46) mittels vorzugsweise zwei Schrauben (44) gesichert ist.

4. Einrichtung nach Anspruch 1, dadurch gekennzeichnet, daß an der verstellbaren Stelleiste (122) der Vereinzelungseinrichtung (100) zur Aufnahme von Halterungsschrauben (124) vorzugsweise zwei senkrecht zur Verstelleinrichtung (Pfeil 1) übereinanderliegende Langlöcher (123) ausgebildet sind, deren Längsachse in der Verstelleinrichtung (Pfeil 1) verläuft.

5. Einrichtung nach Anspruch 1, dadurch gekennzeichnet, daß in dem Einsatzstück (140) der Vereinzelungseinrichtung (100) an dem der Ausfräsung (141) entgegengesetzten Ende eine mit Innengewinde versehene Bohrung (142) zum Einführen einer Schraube zwecks Herausnahme des Einsatzstückes (140) vorgesehen ist.

6. Einrichtung nach Anspruch 1, dadurch gekennzeichnet, daß in der Vereinzelungseinrichtung (100) ein Endlagenschalter (170) vorgesehen ist, bei dessen Betätigung durch den Schieber (130, 134) über ein Druckluftventil Druckluft zum Weiterbefördern des gerade vereinzelten, unter dem rohrförmigen Abgabeteil (151) angeordneten Kleinteil (50) eingeleitet wird.

**Claims**

1. Equipment, for the sorting and singling of small parts (50) with a flange part (54) and a shank part (52), such as screws or weld pins and similar, consisting of a sorting equipment (1) with an equipment which generates vibratory oscillations and is firmly mounted under a circularly cylindrical container (10), at the inside wall of which is formed a helical guide track (11), which reaches from the bottom to the upper rim of the container (10) and leads into a slotted delivery part (40), and of a singling equipment, wherein the width of a slot (46) in the delivery part (40) of the sorting equipment (1), which is provided at the end (11a) of the last upper turn (11a) of the guide track (11), is settable in accordance with the shank diameter of the small parts (50) to be singled, characterised thereby, that

a) for altering the width of a part of the last upper turn (11a) of the helical guide track (11) of the sorting equipment (1), a plate (30) is constructed shortly before its end, which plate is displaceable from outside and in front of which (seen in conveying direction of the small parts (50)) is mounted a settable stripper (20) above the last turn (11a) of the guide track (11),

b) a firmly mounted setting strip (121) and, at a spacing about corresponding to the shank diameter of the small parts (50) to be singled, a resettably mounted setting strip (122) are provided at the input side of the singling equipment (100) behind the delivery part (40) of the sorting equipment (1) and,

c) fastened in a recess (131) of a slide (130), which ia actuable by means of a pressure cylinder, of the singling equipment (100), there is an exchangeable insert piece (140), which is about rectangular in the plan view and displays a milled-out recess (141), which corresponds to the shank diameter of the small parts (50) to be singled, at the end which is adjacent to a tubular delivery part (151) of the singling equipment (100) for the forwarding of the small parts (50) so that

d) each singled small part (50) received in the recess (141) is conveyable towards and below the tubular, pneumatically operated delivery part (151) of the singling equipment (100).

2. Equipment according to claim 1, characterised thereby, that the resettable plate (30) is displaceable at the outside of the container (10) of the sorting equipment (1) on a support part (34) mounted thereat (10) and settable and held at the support part (34) by means of screws passing through elongate holes (32) in the plate (30).

3. Equipment according to claim 1, characterised thereby, that the delivery part (40) is displaceable at the sorting equipment (1) on preferably two guide pins (42) mounted at the outside of the container (10) and that the width, which is settable in accordance with the shank diameter of the small parts respectively to be singled, of the slot (46) is secured by means of preferably two screws (44).

4. Equipment according to claim 1, characterised thereby, that preferably two elongate holes (123), which lie one above the other perpendicularly to the resetting direction (arrow I) and the longitudinal axis of which extends in the resetting direction (arrow I), are constructed for the reception of retaining screws (124) at the resettable setting strip (122) of the singling equipment (100).

5. Equipment according to claim 1, characterised thereby, that a bore (142) provided with internal thread for introduction of a screw for the purpose of withdrawal of the insert piece (140) is provided in the insert piece (140) of the singling equipment (100) at the end opposite to the milled-out recess (141).

6. Equipment according to claim 1, characterised thereby, that provided in the singling equipment (100) is a limit switch (170), on the actuation of which through the slide (130, 134), compressed air is introduced by way of a compressed air valve for the further conveying of the just singled small part (50) arranged below the tubular delivery part (151).

## Revendications

1. Installation pour trier et distribuer séparément des petites pièces (50) pourvues d'un collet (54) et d'une tige (52), comme des vis, des boulons à souder et pièces analogues, comprenant un dispositif de triage (1) muni d'un mécanisme engendrant des vibrations, qui est installé rigidement au-dessous d'un réceptacle cylindrique droit (10) sur la paroi interne duquel est ménagée une piste hélicoïdale de guidage (11) qui s'étend du fond jusqu'au bord supérieur du réceptacle (10) et débouche dans une partie fendue de délivrance (40), ainsi qu'un dispositif de distribution séparée, installation dans laquelle, dans la partie de délivrance (40) du dispositif de triage (1) prévue à l'extrémité (11a') de la dernière spire supérieure (11a) de la piste de guidage (11), la largeur d'une fente (46) peut être réglée en fonction du diamètre de tige des petites pièces (50) devant être distribuées séparément,
caractérisée par le fait que
a) pour faire varier la largeur d'une partie de la dernière spire supérieure (11a) de la piste hélicoïdale de guidage (11) du dispositif de triage (1), une plaque (30) pouvant coulisser de l'extérieur est ménagée peu avant l'extrémité dudit dispositif, plaque avant laquelle [en considérant la direction d'acheminement des petites pièces (50)] un racleur réglable (20) est installé au-dessus de la dernière spire (11a) de la piste de guidage (11);
b) après la partie de délivrance (40) du dispositif de triage (1), du côté entrée du dispositif (100) de distribution séparée, sont prévues une barrette de réglage (121) occupant une position fixe et, sensiblement à une distance correspondant au diamètre de tige des petites pièces (50) à distribuer séparément, une barrette de réglage (122) retenue de manière ajustable, et
c) un embout remplaçable (140), sensiblement rectangulaire observé en plan, est fixé dans un évidement (131) d'une coulisse (130) du dispositif (100) de distribution séparée pouvant être actionnée au moyen d'un cylindre de pression, lequel embout présente, à l'extrémité qui est voisine d'une partie tubulaire de délivrance (151) du dispositif (100) de distribution séparée, afin de transférer les petites pièces (50), une dépouille fraisée (141) correspondant au diamètre de tige des petites pièces (50) devant être distribuées séparément, de telle sorte que
d) chaque petite pièce (50) distribuée séparément et reçue dans la dépouille fraisée (141) puisse être acheminée, au moyen de la coulisse (130), en direction et au-dessous de la partie tubulaire de délivrance (151) du dispositif (100) de distribution séparée, commandée pneumatiquement.

2. Installation selon la revendication 1, caractérisée par le fait que la plaque réglable (30) peut coulisser, la face externe du réceptacle (10) du dispositif de triage (1), sur une pièce d'appui (34) installée sur ce dernier (10), en étant retenue sur la pièce d'appui (34) et réglable au moyen de boulons traversant des trous oblongs (32) pratiqués dans cette plaque (30).

3. Installation selon la revendication 1, caractérisée par le fait que la partie de délivrance (40) peut coulisser sur le dispositif de triage (1), de préférence sur deux chevilles de guidage (42) implantées à la face externe du réceptacle (10); et par le fait que la largeur de la fente (46), réglable en fonction du diamètre de tige des petites pièces considérées devant être distribuées séparément, est consignée fermement de préférence au moyen de deux boulons (44).

4. Installation selon la revendication 1, caractérisée par le fait que, de préférence, deux trous oblongs (123) superposés perpendiculairement au dispositif d'ajustement (flèche I) sont ménagés sur la barrette ajustable de réglage (122) du dispositif (100) de distribution séparée, afin de recevoir des boulons de retenue (124), l'axe longitudinal desdits trous s'étendant dans le dispositif d'ajustement (flèche I).

5. Installation selon la revendication 1, caractérisée par le fait qu'un perçage (142) muni d'un filetage interne est prévu dans l'embout (140) du dispositif (100) de distribution séparée, à l'extrémité tournée à l'opposé de la depouille fraisée (141) en vue de l'insertion d'un boulon permettant d'extraire ledit embout (140).

6. Installation selon la revendication 1, caractérisée par le fait qu'il est prévu, dans le dispositif (100) de distribution séparée, un interrupteur de fin de course (170) qui, lorsqu'il est activé par la coulisse (130, 134), provoque, par l'intermédiaire d'une valve à air comprimé, l'admission d'air comprimé destiné à la poursuite de l'acheminement de la petite pièce (50) qui vient d'être distribuée séparément et se trouve au-dessous de la partie tubulaire de délivrance (151).

**FIG.1**

FIG.2

FIG.4

FIG.3

144 781

100

FIG. 5